# FASCICULE DE BREVET EUROPEEN

(11) **EP 3 395 612 B1**
(45) Date de publication et mention de la délivrance du brevet: **16.06.2021**
(21) Numéro de dépôt: 18168847.4
(22) Date de dépôt: 23.04.2018
(51) Int. Cl.: B60P 7/08

(54) **SYSTÈME D'ARRIMAGE D'UNE CHARGE ET SUPPORT DE PLANCHER CORRESPONDANT**
FESTZURRSYSTEM EINER LADUNG, UND ENTSPRECHENDE BODENHALTERUNG
SYSTEM FOR SECURING A LOAD AND CORRESPONDING FLOOR SUPPORT

(30) Priorité: 24.04.2017 FR 1753525
(43) Date de publication de la demande: 31.10.2018
(73) Titulaire: Ur'ben, 12800 Naucelle (FR)
(72) Inventeur: GOMES, Pascal, 81000 ALBI (FR)
(74) Mandataire: Plasseraud IP

(56) Documents cités:
- EP-A1- 3 059 119
- EP-A2- 2 781 406
- DE-A1- 10 107 598
- DE-U1-202006 007 916
- FR-A1- 2 782 040

## Description

### DOMAINE DE L'INVENTION

La présente invention concerne un système permettant l'arrimage de charges à un plancher, typiquement un plancher de remorque, d'utilitaire ou de benne, par exemple, et un support de plancher correspondant. Le système d'arrimage selon l'invention peut être utilisé sur tout type de plancher sur lequel on souhaite stabiliser une charge à l'aide d'une sangle d'arrimage.

### ETAT DE LA TECHNIQUE

On connait de l'art antérieur, différents systèmes permettant l'arrimage de charges à un plancher. Typiquement, ces systèmes comprennent un organe d'ancrage et d'arrimage fixé sur le plancher ou à proximité du plancher sur lequel on accroche une sangle, par exemple au moyen de crochets. Afin de permettre plus de flexibilité dans l'arrimage des charges par des sangles, les organes d'ancrage et d'arrimage sont aptes à être montés sur des rails. Tels systèmes sont connus par exemple des documents EP 3 059 119 A1, DE 101 07 598 A1 et US 2003/0053879 A1.

Le document US 2003/0053879 A1 décrit par exemple un organe d'ancrage et de verrouillage comportant une boucle, sur laquelle peut être accrochée une sangle, et un corps présentant une partie inférieure recourbée apte à être insérée dans l'ouverture d'un rail. Le corps comprend par ailleurs des languettes aptes à être insérées dans des orifices prévus à cet effet dans les bords de l'ouverture du rail. L'organe d'ancrage et de verrouillage est maintenu en place par l'insertion de pions dans des trous présents dans les languettes du corps de l'organe d'ancrage et de verrouillage. Il résulte de cette structure que l'organe d'ancrage et de verrouillage est particulièrement difficile à installer et à retirer. Il reste donc en place dans l'ouverture du rail lorsqu'il n'est pas utilisé et peut donc réduire la surface du plancher pouvant réceptionner la charge, voire endommager la charge lorsque celle-ci est chargée ou déchargée.

Il existe donc un besoin pour un système d'arrimage d'une charge permettant d'optimiser la surface de plancher pouvant être occupée par la charge tout en empêchant son endommagement lors d'opérations de manutention de la charge sur le plancher.

### OBJET ET RESUME DE L'INVENTION

À cet effet, selon un premier aspect, la présente invention propose un
un système d'arrimage d'une charge sur un plancher, le système comprenant :
- un rail d'ancrage destiné à être relié à un bord du plancher et comportant un logement débouchant par une ouverture pratiquée sur au moins l'une des faces du rail,
- un organe d'ancrage et d'arrimage d'une charge sur un plancher, ledit organe d'ancrage et d'arrimage comportant une portion d'arrimage d'une sangle et une portion d'ancrage au plancher apte à coopérer avec le rail,
dans lequel l'ouverture du rail s'étend dans l'une des faces du rail perpendiculaire à la direction longitudinale du plancher et délimitée par deux bords de ladite face.

Le système d'arrimage comprend en outre un cavalier adapté pour être monté sur l'ouverture du rail en fermant ladite ouverture, le cavalier étant conformé pour recevoir la portion d'ancrage de l'organe d'ancrage et d'arrimage, quand l'organe est dans une position déployée.

En outre, le logement du rail et l'organe d'ancrage et d'arrimage sont conformés pour permettre l'adoption par ledit organe d'une position escamotée dans laquelle la portion d'ancrage de l'organe d'ancrage et d'arrimage est reçue dans le logement du rail, l'organe d'ancrage et d'arrimage étant mobile entre la position déployée et la position escamotée.

Dans la suite de la description, on entend par « relié » des éléments connectés ou solidaires entre eux.

Selon l'invention, l'organe d'ancrage et d'arrimage peut être facilement ancré dans le plancher par l'intermédiaire du cavalier qui est monté sur l'ouverture du rail sans empiéter sur le plancher de chargement. De plus, l'organe d'ancrage et d'arrimage est accessible à l'utilisateur depuis l'extérieur du chargement.

L'ouverture du rail se trouvant dans un plan orienté perpendiculairement à la surface du plancher, la charge peut reposer sur l'intégralité du plancher prolongé par le rail.

L'ouverture du rail se trouvant sur un plan vertical et en dehors de la surface du chargement, l'ouverture du rail n'est pas exposée aux produits transportés et est donc moins sujette à l'encrassement.

Par ailleurs, le rail étant facilement accessible, l'utilisateur peut ajouter des points d'arrimages supplémentaires, c'est-à-dire des cavaliers associés à des organes d'ancrage et d'arrimage, ou facilement déplacer ceux existants afin de s'adapter à la charge à arrimer. Le rail d'ancrage permet également de monter autant de points d'arrimage que nécessaire.

De plus, l'organe d'ancrage et d'arrimage, et plus particulièrement la portion d'ancrage de l'organe d'ancrage et d'arrimage, est apte à se déplacer dans l'espace formé par le logement du rail et l'intérieur du cavalier entre une position dans laquelle une partie de l'organe d'ancrage et d'arrimage est reçue dans le logement du rail et une position dans laquelle la portion d'arrimage de l'organe d'ancrage et d'arrimage peut être utilisée pour recevoir une sangle d'arrimage permettant d'arrimer une charge au plancher. Il suffit alors de tirer sur la portion d'arrimage pour faire coulisser la portion d'ancrage jusque dans la portion du cavalier conformée pour recevoir la portion d'ancrage de l'organe d'ancrage et d'arrimage. On évite ainsi de devoir retirer l'organe d'ancrage et d'arrimage et le cavalier entre deux utilisations pour ne pas endommager la charge lorsque celle-ci est déplacée sur le plancher lors d'opérations de chargement et de déchargement.

De manière avantageuse, le logement s'étend dans la direction longitudinale du rail d'ancrage. Lorsque le logement et l'ouverture couvrent entre 50% et 100% de la longueur du rail sur lequel ils sont fixés, les cavaliers déjà montés dans l'ouverture peuvent être facilement déplacés afin de pouvoir s'adapter à la charge à arrimer présente sur le plancher. Par ailleurs, il est également possible d'insérer d'autres cavaliers associés à des organes d'ancrage et d'arrimage en fonction des besoins. En outre, lorsque le logement et l'ouverture couvrent la totalité de la longueur du rail, le rail d'ancrage peut être réalisé en une seule étape par extrusion.

De manière avantageuse, le cavalier vient en prise avec les deux bords de ladite face. Ainsi, le cavalier peut être monté sur l'ouverture du rail sans que des outils particuliers supplémentaires soient nécessaires.

De manière particulièrement avantageuse, le cavalier comporte des moyens d'encliquetage, et l'ouverture du rail comporte, de part et d'autre de l'ouverture, des moyens d'encliquetage complémentaires.

De manière encore plus avantageuse, les moyens d'encliquetage du cavalier comprennent deux pattes de retenue au rail, chaque patte comportant sur une face externe une rainure adaptée pour recevoir un bord de l'ouverture du rail, l'une des pattes étant coudée en forme de L pour venir en appui sur l'un des bords de l'ouverture du rail. Le cavalier comporte également une paroi extérieure adjacente à l'autre patte de retenue et s'étendant orthogonalement à ladite patte.

Le cavalier peut ainsi être facilement inséré dans l'ouverture du rail en introduisant le bord inférieur de l'ouverture dans la rainure de la patte coudée et en faisant pivoter le cavalier de façon à introduire le bord supérieur dans la rainure de l'autre patte. La patte coudée en forme de L et la paroi adjacente et orthogonale à l'autre patte permettent de retenir le cavalier dans l'ouverture du rail en faisant butée contre les bords de l'ouverture lorsque la portion d'ancrage est dans le cavalier et qu'une charge est arrimée à la portion d'arrimage de l'organe d'ancrage et d'arrimage. La portion d'arrimage est alors orientée vers le plancher.

De manière avantageuse, la portion d'ancrage de l'organe d'ancrage et d'arrimage est arrondie et l'intérieur du cavalier comporte une portion arrondie apte à coopérer avec la portion d'ancrage.

La portion arrondie du cavalier permet le pivotement de la partie d'ancrage dans la portion arrondie du cavalier correspondante lorsque l'organe d'ancrage et d'arrimage est en position déployée. L'organe d'ancrage et d'arrimage peut ainsi être orienté vers le plancher et la portion d'arrimage de l'organe d'ancrage et d'arrimage peut être arrimée à la charge à l'aide d'une sangle munie d'un ou plusieurs crochets, par exemple.

De manière avantageuse, le cavalier présente une surface courbe adaptée pour guider le déplacement de l'organe d'ancrage et d'arrimage entre la position déployée et la position escamotée.

L'intérieur du cavalier est adapté pour faciliter le guidage de la portion d'ancrage de l'organe d'ancrage et d'arrimage lors de son passage entre la position déployée et la position escamotée.

De manière avantageuse, le cavalier comporte une surface extérieure définissant une rigole conformée pour recevoir la portion d'arrimage de l'organe d'ancrage et d'arrimage lorsque l'organe d'ancrage et d'arrimage est en position escamotée.

Ainsi, l'organe d'ancrage et d'arrimage peut être maintenu de manière fiabilisée en position escamotée. La portion d'arrimage repose alors sur la rigole et la portion d'ancrage se trouve à l'intérieur du logement du rail.

De manière avantageuse, le rail d'ancrage comporte une face supérieure et le cavalier est configuré de telle sorte que l'organe d'ancrage et d'arrimage se trouve sous la face supérieure du rail d'ancrage lorsque l'organe d'ancrage et d'arrimage est en position escamotée.

Ainsi l'organe d'ancrage et d'arrimage n'est pas en saillie hors du support de plancher lorsque l'organe d'ancrage et d'arrimage est en position escamotée. Par conséquent, le cavalier est configuré pour ne pas dépasser de la face supérieure du support. En outre, et si nécessaire, la portion d'arrimage de l'organe d'ancrage et d'arrimage, lorsqu'elle coopère ou repose sur le cavalier, peut également être conformée afin de ne pas être en saillie par rapport à la face supérieure du support. On évite ainsi un endommagement de la charge lors d'opérations de chargement et de déchargement.

De manière avantageuse, l'organe d'ancrage et d'arrimage comporte deux portions latérales reliant entre elles les portions d'ancrage et d'arrimage, un trou traversant étant formé entre les portions d'ancrage, d'arrimage et latérales, lesdites portions latérales étant recourbées.

Les portions latérales recourbées permettent de réduire la taille du logement dans le rail.

En outre, lorsque l'organe d'ancrage et d'arrimage comporte un trou traversant, le cavalier peut être placé dans le trou traversant avant d'être monté sur l'ouverture du rail. Les portions latérales entourent alors le cavalier lorsque le cavalier est monté. Le cavalier et l'organe d'ancrage et d'arrimage peuvent donc être conçus comme deux pièces indépendantes facilement assemblées avant d'être montées sur le rail.

Dans un mode de réalisation, les portions d'arrimage et d'ancrage sont formées par deux tiges longitudinales parallèles entre elles reliées par au moins deux tiges transversales recourbées.

Un tel système est robuste et facile à fabriquer.

Dans un mode de réalisation particulier, les portions d'arrimage et d'ancrage de l'organe d'ancrage et d'arrimage sont formées de deux tiges longitudinales parallèles entre elles reliées par trois tiges transversales recourbées et en ce que le système d'arrimage comporte deux cavaliers.

Cette forme de réalisation est particulièrement adaptée à l'utilisation d'une sangle à double crochet. La sangle étant maintenue par deux crochets, la charge est plus solidement ancrée.

Dans un mode de réalisation particulier, le rail d'ancrage est relié à un bras d'extension apte à recevoir un bord du plancher s'étendant selon une direction longitudinale.

Le rail d'ancrage peut donc être relié au plancher par le biais du bras d'extension. Le plancher repose alors dans un épaulement défini par le bras d'extension. L'épaulement peut être formé par le bras d'extension et une face verticale du rail d'ancrage. L'épaulement peut aussi être formé directement dans le bras d'extension. Dans ce cas, la surface utile du plancher est également prolongée par le bras d'extension.

Selon un second aspect, l'invention propose un support de plancher pourvu d'un rail d'ancrage d'un organe d'ancrage et d'arrimage d'une charge sur un plancher comportant un bras d'extension s'étendant selon une direction longitudinale apte à recevoir un bord du plancher, et un rail d'ancrage comportant un logement débouchant par une ouverture, l'ouverture s'étendant dans un plan perpendiculaire à la direction longitudinale du bras d'extension.

Le plancher peut être prolongé par un support de plancher comportant le rail d'ancrage. Comme décrit précédemment, le rail d'ancrage présente une ouverture s'étendant dans un plan perpendiculaire à la direction longitudinale du bras d'extension. Un organe d'ancrage et d'arrimage peut être facilement ancré dans le plancher sans risquer d'endommager la charge reposant sur le support de plancher.

Selon un mode de réalisation particulier, le bras d'extension définit un épaulement apte à recevoir un bord du plancher.

L'épaulement peut être formé par le bras d'extension et une face verticale du rail d'ancrage.

L'épaulement peut aussi être formé directement dans le bras d'extension. Dans ce cas, la surface utile du plancher est également prolongée par le bras d'extension. Le bras d'extension peut alors comprendre une structure rigide renforcée permettant de supporter un plancher avec des charges plus lourdes, par exemple, ou tout autre élément d'un véhicule coopérant avec le support de plancher.

### BREVE DESCRIPTION DES FIGURES

Des détails et avantages de la présente invention apparaitront mieux de la description qui suit, faite en référence aux dessins annexés sur lesquels :
la figure 1A représente un organe d'ancrage et d'arrimage selon un mode de réalisation de l'invention,
la figure 1B représente un organe d'ancrage et d'arrimage selon un autre mode de réalisation de l'invention,
la figure 2 représente un cavalier selon un mode de réalisation de l'invention,
la figure 3 représente l'ensemble formé par l'organe d'ancrage et d'arrimage et le cavalier des figures 1 et 2, avec l'organe d'ancrage et d'arrimage en position déployée,
la figure 4 représente une vue de côté du système d'arrimage selon un mode de réalisation de l'invention avec l'organe d'ancrage et d'arrimage en position déployée,
la figure 5 représente une vue de côté du système d'arrimage selon un mode de réalisation de l'invention avec l'organe d'ancrage et d'arrimage en position escamotée,
la figure 6 représente l'ensemble formé par un organe d'ancrage et d'arrimage et deux cavaliers, selon une variante de réalisation de l'invention,
la figure 7 représente un support de plancher selon un mode de réalisation de l'invention,
la figure 8 représente une vue de côté d'un système d'arrimage selon un autre mode de réalisation de l'invention.

### DESCRIPTION DETAILLEE DE PLUSIEURS MODES DE REALISATION DE L'INVENTION

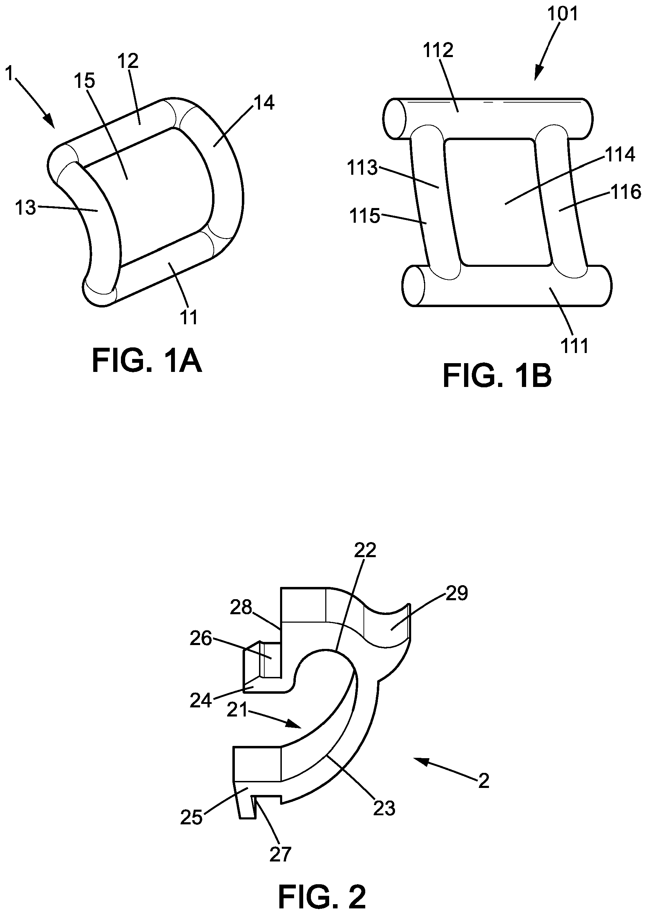

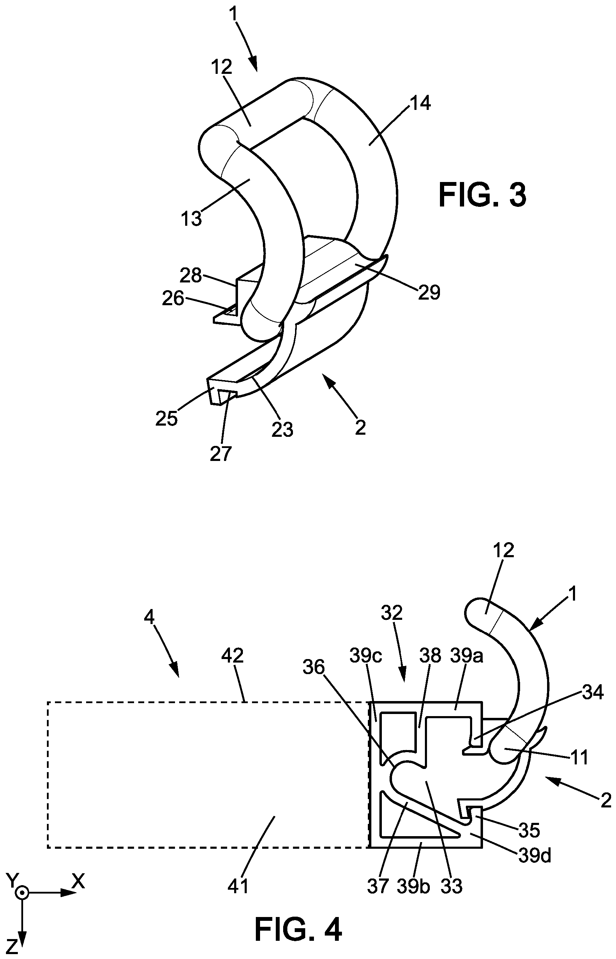

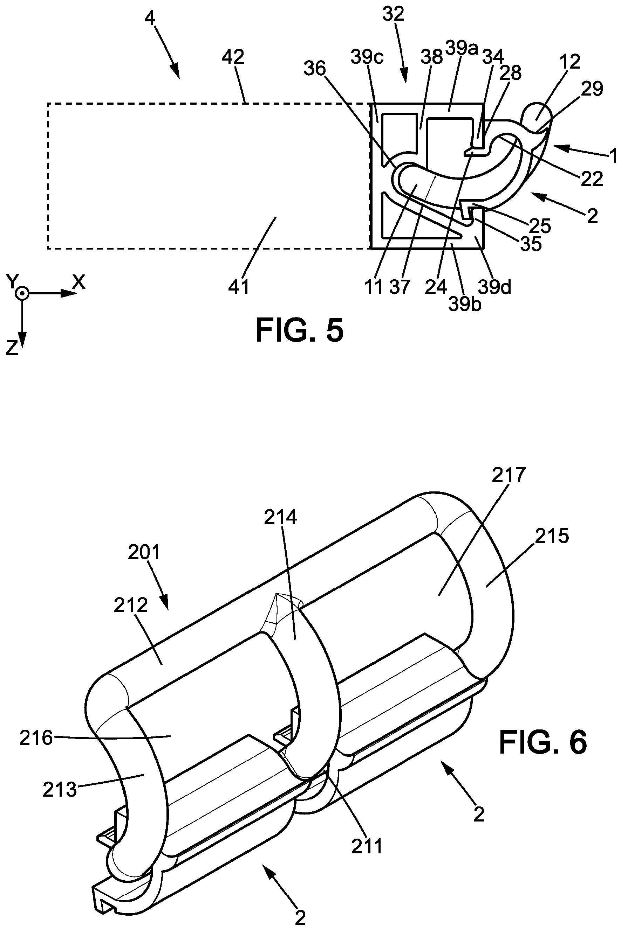

La figure 1A représente un organe d'ancrage 1 selon un mode de réalisation de l'invention. L'organe d'ancrage 1 comporte une portion d'ancrage 11, une portion d'arrimage 12 et deux portions latérales 13 et 14. Les portions latérales 13 et 14 relient entre elles les portions d'ancrage 11 et d'arrimage 12 et sont de préférence recourbées. La portion d'ancrage 11 est destinée à être ancrée au plancher par l'intermédiaire du rail d'ancrage tel que décrit par exemple en référence aux figures 4 et 5. La portion d'arrimage 12 est destinée à être accrochée à une sangle d'arrimage d'une charge.

Dans ce mode de réalisation, les portions d'ancrage 11 et d'arrimage 12, ainsi que les portions latérales 13 et 14 sont formées par deux tiges longitudinales parallèles entre elles reliées par deux tiges transversales recourbées.

Les tiges constituant les portions d'ancrage 11, d'arrimage 12 et latérales 13, 14 sont par exemple métalliques et soudées entre elles.

Les portions d'ancrage 11 et d'arrimage 12, ainsi que les portions latérales 13 et 14 sont de préférence de section circulaire.

L'organe d'ancrage et d'arrimage 1 comporte en outre un trou traversant 15 formé entre les portions d'ancrage 11, d'arrimage 12 et latérale 13, 14.

Dans un autre mode de réalisation représenté en référence à la figure 1B, l'organe d'ancrage et d'arrimage 101 est formé d'un seul tenant et comporte des portions d'ancrage 111 et d'arrimage 112 arrondies, c'est-à-dire présentant une section au moins en partie circulaire ou elliptique, reliées entre elles par une surface plane recourbée 113. Un tel organe d'ancrage et d'arrimage peut être réalisé dans un matériau composite tel que le PEEK (acronyme anglais du polyétheréthercétone ou PolyEtherEtherKetone) par moulage, par exemple. Dans ce cas également, l'organe d'ancrage et d'arrimage peut également comprendre un trou traversant 114. L'organe d'ancrage et d'arrimage 101 comprend alors deux portions latérales 115, 116.

La figure 2 représente un cavalier 2 selon un mode de réalisation de l'invention. Le cavalier est invariant en translation selon un axe rectiligne parallèle à celui du rail. En section transversale, le cavalier a une forme de crochet comprenant une surface interne 21 destinée à recevoir la portion d'ancrage de l'organe d'ancrage et d'arrimage 1, ladite surface interne comprenant une portion en demi-cercle 22 et une portion courbe 23 prolongeant ladite portion en demi-cercle 22 sur un côté. Le cavalier comporte par ailleurs deux pattes de retenue au rail 24, 25 comportant chacune sur une face externe une rainure 26, 27, respectivement. Le cavalier 2 comporte également une paroi extérieure 28 adjacente à la patte de retenue 24 et s'étendant orthogonalement à cette patte. L'autre patte de retenue au rail 25 est coudée en forme de L. Les pattes de retenue 24, 25 constituent des moyens d'encliquetage à l'ouverture du rail d'ancrage 32 décrit plus précisément en référence aux figures 4 et 5. Le cavalier 2 comporte également une surface extérieure définissant une rigole 29. La rigole 29 est conformée pour recevoir la portion d'arrimage 12 de l'organe d'ancrage et d'arrimage 1 lorsque l'organe d'ancrage et d'arrimage 1 est en position escamotée, c'est-à-dire lorsqu'une partie de l'organe d'ancrage et d'arrimage 1 est reçue dans un logement 33 du rail d'ancrage 32 prévu à cet effet tel que décrit en référence à la figure 5.

La figure 3 représente l'ensemble formé par l'organe d'ancrage et d'arrimage et le cavalier des figures 1 et 2. Dans la figure 3, l'organe d'ancrage et d'arrimage est en position déployée, c'est-à-dire que la portion d'ancrage 11 arrondie coopère avec la portion arrondie 22 du cavalier 2 tel que décrit en référence aux figures 1 et 2, respectivement. L'organe d'ancrage et d'arrimage 1 peut donc pivoter librement dans le cavalier 2 afin d'orienter la portion d'arrimage 12 vers la sangle servant à arrimer la charge au plancher.

Les figures 4 et 5 représentent une vue de côté du système d'arrimage selon un mode de réalisation de l'invention, avec l'organe d'ancrage et d'arrimage en position déployée et en position escamotée, respectivement.

Dans le mode de réalisation décrit ici, le système d'arrimage comprend un organe d'ancrage 1 et un cavalier 2 tels que décrits précédemment en relation avec les figures 1 et 2 et un rail d'ancrage 32.

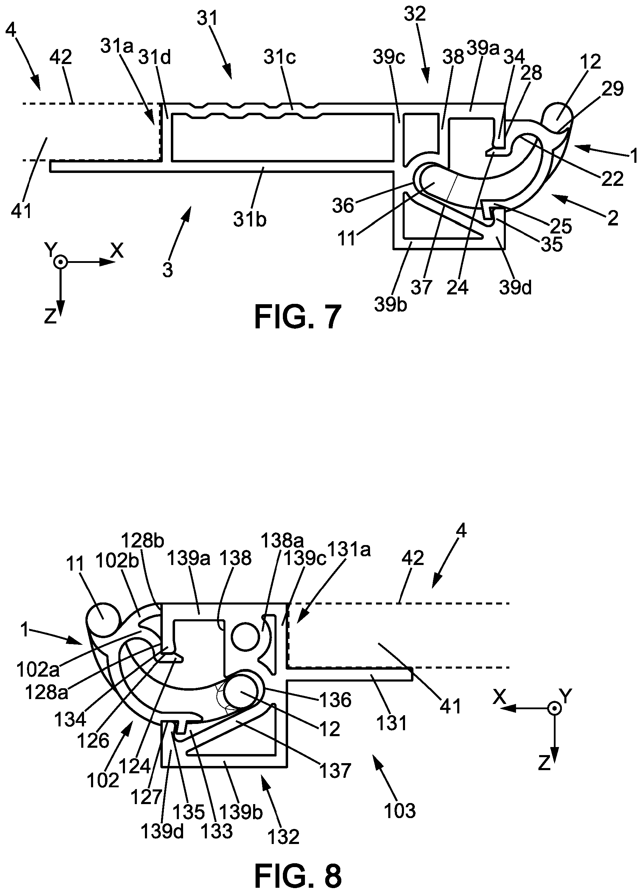

Le rail d'ancrage 32 comporte une paroi supérieure 39a, une paroi inférieure 39b et deux parois verticales 39c, 39d. Le rail d'ancrage comporte un logement 33 débouchant sur une ouverture dans la paroi verticale 39d. Le rail d'ancrage 32 est relié par sa paroi verticale 39c à un bord 41 du plancher 4 de manière à prolonger le plancher. Le plancher 4, ou tout du moins le bord 41 du plancher 4, et le rail d'ancrage 32 peuvent être d'un seul tenant et réalisés en une même matière telle que l'aluminium ou le bois. Le plancher 4 peut donc comporter sur l'un de ces bords un rail d'ancrage 32. Le rail d'ancrage 32 peut également être fixé sur le bord 41 du plancher 4, par exemple à l'aide de vis. D'autres variantes de réalisation illustrées en référence aux figures 7 et 8 mettent en œuvre un support de plancher permettant de fixer le rail d'ancrage au plancher.

Le rail d'ancrage 32 comporte un logement 33 s'étendant dans la direction longitudinale Y du rail d'ancrage 32 et débouchant par une ouverture délimitée par deux bords 34, 35. L'ouverture formée par les deux bords 34, 35 s'étend dans un plan YZ perpendiculaire à la direction longitudinale du plancher 4 et comporte une direction principale Y. Le logement 33 et l'ouverture couvrent entre 50 et 100% de la longueur du rail auquel ils sont fixés. Le logement et l'ouverture couvrent de préférence la totalité de la longueur du rail d'ancrage 32. Le rail d'ancrage 32 peut alors être obtenu en une seule étape par extrusion. Les deux bords de l'ouverture 34, 35 constituent des moyens d'encliquetage complémentaires des pattes de retenue 24, 25 du cavalier 2, c'est-à-dire que les bords de l'ouverture présentent une largeur et une forme adaptée pour pouvoir être reçus dans les rainures des pattes du cavalier. Le cavalier est inséré dans l'ouverture du rail d'ancrage 32 en introduisant le bord inférieur 35 de l'ouverture dans la rainure 27 de la patte de retenue coudée 25 et en faisant pivoter le cavalier de façon à introduire le bord supérieur 34 de l'ouverture dans la rainure 26 de l'autre patte de retenue 24. Le cavalier, lorsqu'il est monté sur le rail, est en saillie hors du rail d'ancrage et le cavalier 2 vient en prise avec les bords 34, 35.

Le logement 33 du rail d'ancrage 32 est conformé pour permettre l'adoption par l'organe d'ancrage et d'arrimage 1 d'une position escamotée telle que représentée en référence à la figure 5.

Dans ce mode de réalisation, le logement 33 du rail d'ancrage 32 comporte une portion 36 de forme complémentaire de celle de la portion d'ancrage 11 et une surface 37 plane particulièrement visible en référence à la figure 4. Dans une variante de réalisation, la surface 37 peut être courbe avec un rayon de courbure adapté à une partie des portions latérales 13 reçues dans le logement 33.

En outre, le rail d'ancrage 32 comporte une paroi verticale 38 de support. La paroi verticale 38 de support relie la portion 36 de forme complémentaire de celle de la portion d'ancrage 11 à la paroi supérieure 39a du rail 32.

En position escamotée, telle que représentée en référence à la figure 5, la portion d'ancrage 11 de l'organe d'ancrage et d'arrimage 1 est reçue dans la portion 36 de forme complémentaire. Une partie des portions latérales recourbées 13 et 14 est reçue dans le logement 33 alors que la portion d'arrimage 12 est reçue dans la rigole 29, ce qui permet une bonne stabilité de l'ensemble car l'organe d'ancrage et d'arrimage 1 est maintenu en position dans la rigole.

Du fait de la configuration du rail d'ancrage 32, dont l'ouverture s'étend selon un plan perpendiculaire YZ à la direction longitudinale X du plancher dont la face supérieure 39a est à la même hauteur que la face supérieure 42 du plancher 4, la surface utile du plancher est agrandie de toute la largeur du rail d'ancrage 32, et n'est pas gênée par l'organe d'ancrage et d'arrimage 1.

De plus, le cavalier 2 et la portion d'arrimage 12 de l'organe d'ancrage et d'arrimage 1 sont configurés pour ne pas dépasser de la face supérieure du plancher lorsque l'organe d'ancrage et d'arrimage 1 est en position escamotée. L'organe d'ancrage et d'arrimage 1 ne fait donc pas saillie par rapport au niveau du plancher et ne gêne donc pas l'installation d'une charge.

En position déployée, telle que représentée en référence à la figure 4, la portion d'ancrage 11 de l'organe d'ancrage et d'arrimage 1 est reçue dans la portion en demi-cercle 22 du cavalier 2 conformée à cet effet. Le cavalier 2 étant en saillie hors du rail d'ancrage, l'organe d'ancrage et d'arrimage 1 se trouve hors du logement 33 lorsqu'il est en position déployée. La portion d'arrimage 12 de l'organe d'ancrage et d'arrimage 1 peut alors être facilement pivotée de façon à être orientée vers la charge présente sur le plancher et éventuellement sur la face supérieure 39a du rail, le rail d'ancrage 32 formant une prolongation du plancher. La portion d'arrimage 12 de l'organe d'ancrage et d'arrimage 1 peut alors être arrimée à la charge à l'aide d'une sangle munie d'un ou de plusieurs crochets, par exemple. La patte de retenue 25 coudée en forme de L et la paroi externe 28 perpendiculaire à la patte de retenue 24 viennent alors en appui contre les bords 34, 35 de l'ouverture et font office de butée pour empêcher le cavalier de se désengager des bords de l'ouverture du rail d'ancrage 32.

On passe de la position déployée de la figure 4 à la position escamotée de la figure 5 en faisant glisser la portion d'ancrage 11 de l'organe d'ancrage et d'arrimage 1 sur la surface courbe 23 du cavalier 2 puis sur la surface 37 du logement 33, et réciproquement.

La figure 6 représente une variante de réalisation de l'invention dans laquelle l'organe d'ancrage et d'arrimage 201 comprend trois tiges recourbées 213, 214, 215 reliant les portions d'ancrage 211 et d'arrimage 212.

Tout comme dans le mode de réalisation de la figure 1A, les portions d'ancrage 211, d'arrimage 212 sont formées par deux tiges longitudinales parallèles entre elles reliées par trois tiges transversales recourbées 213, 214, 215. Les tiges sont également métalliques et soudées entre elles. L'organe d'ancrage et d'arrimage 201 comporte deux trous traversants 216, 217. Les trous traversants 216, 217 sont formés entre les portions d'ancrage 211, d'arrimage 212 et latérales 213, 214 et 214, 215, respectivement. La portion d'ancrage 211 comprise entre les tiges 213 et 214 ainsi que la portion d'ancrage 211 comprise entre les tiges 214 et 215 sont aptes à coopérer avec la partie arrondie de deux cavaliers 2 semblables à celui décrit précédemment. La portion d'ancrage 211 est introduite dans les deux cavaliers 2 puis les cavaliers 2 sont introduits dans le logement du rail d'ancrage 32 comme décrit précédemment. Un tel organe d'ancrage et d'arrimage 201 est particulièrement adapté pour arrimer une charge à l'aide d'une sangle à double crochets.

La figure 7 représente un support de plancher 3 selon un mode de réalisation de l'invention. Le support de plancher 3 comprend un bras d'extension 31 s'étendant selon une direction longitudinale X et un rail d'ancrage 32 tel que celui décrit précédemment en référence aux figures 4 et 5 par exemple. Le support de plancher est également formé par extrusion.

Le bras d'extension 31 est relié au rail d'ancrage 32. Le bras d'extension 31 définit un épaulement 31a apte à recevoir un bord 41 d'un plancher 4 (représenté en pointillés) qui sera par la suite fixé au support de plancher. Le bras d'extension 31 est formé, dans cet exemple de réalisation, de deux parois horizontales inférieure 31b et supérieure 31c reliées à la paroi verticale 39c du rail d'ancrage et reliées entre elles par une paroi verticale 31d. L'épaulement 31a est formé par une extrémité de la paroi horizontale inférieure 31b et par la surface verticale 31d.

Dans ce mode de réalisation, l'espace délimité par les parois horizontales 31b, 31c et par les parois verticales 31d et 39c est vide. Dans une variante de réalisation, cet espace est rempli du même matériau que celui constituant les parois horizontales 31b, 31c et verticales 31d, 39c. L'espace délimité par les parois horizontales 31b, 31c et les parois verticales 31d et 39c permet de rigidifier le bras d'extension afin qu'il puisse supporter des charges plus lourdes.

Le support de plancher 3 forme une prolongation du plancher 4 présent dans l'épaulement 31a. La face supérieure du rail et du bras d'extension, formées respectivement par la face supérieure de la paroi supérieure 39a du rail d'ancrage 32 et par la paroi supérieure 31c du bras d'extension 31, sont à la même hauteur que la face supérieure 42 du plancher 4 présent dans l'épaulement 31a. La surface utile du plancher est donc agrandie de toute la largeur de la paroi 31c et du rail d'ancrage 32, et n'est pas gênée par l'organe d'ancrage et d'arrimage 1.

La figure 8 représente une vue de côté d'un système d'arrimage selon un autre mode de réalisation de l'invention, avec un organe d'ancrage et d'arrimage en position escamotée.

Dans le mode de réalisation décrit ici, le système d'arrimage comprend un organe d'ancrage et d'arrimage 1 semblable à celui précédemment décrit en référence aux figures 1A ou 1B ainsi qu'un cavalier 102 et un rail d'ancrage 132.

Le rail d'ancrage 132 et le cavalier 102 sont en partie semblables au rail d'ancrage 32 et au cavalier 2 décrits en référence aux figures 1 à 5. On a donc ajouté le chiffre 100 aux références numériques du rail d'ancrage et du cavalier des figures 1 à 5 pour les éléments semblables.

Dans ce mode de réalisation, l'espace compris entre la paroi verticale de support 138, la paroi verticale 39c du rail d'ancrage 132 et la portion arrondie 136 destinée à recevoir la portion d'ancrage 11 comprend une structure tubulaire 138a destinée à renforcer ou à rigidifier le rail d'ancrage 132.

Par ailleurs, le rail d'ancrage 132 est relié à un bras d'extension 131 et forme un support de plancher 103. Le bras d'extension 131 est formé par une simple paroi s'étendant selon une direction longitudinale X. L'épaulement 131a apte à recevoir un bord 41 du plancher 4 (représenté en pointillés) est formé par le bras d'extension 131 et par la paroi verticale 139c du rail d'ancrage 132 perpendiculaire à la direction longitudinale X. Le bord 41 du plancher 4 est fixé dans l'épaulement 131a par des moyens connus de l'homme du métier.

La structure du cavalier 102 diffère de celle précédemment décrite en ce que la surface d'appui du cavalier 102 sur le bord externe de l'ouverture 134 se compose d'un premier bras d'appui 102a et d'un second bras d'appui 102b. Le premier bras d'appui 102a s'étend vers le bord 134 de l'ouverture et comporte la patte de retenue 124. Le premier bras d'appui 102a comprend une paroi extérieure 128a adjacente et perpendiculaire à la patte de retenue 124 de taille plus restreinte que la paroi extérieure 28 du cavalier 2. Le second bras d'appui 102b s'étend vers la paroi verticale 139b du rail d'ancrage 132 et comporte une paroi extérieure 128b venant prendre appui sur la paroi verticale 139b à proximité du bord 134 de l'ouverture.

## Revendications

1. Système d'arrimage d'une charge sur un plancher (4), ledit système comprenant :
- un rail d'ancrage (32 ; 132) destiné à être relié à un bord du plancher et comportant un logement (33 ; 133) débouchant par une ouverture pratiquée sur au moins l'une des faces du rail,
- un organe d'ancrage et d'arrimage (1 ; 101 ; 201) d'une charge sur un plancher, ledit organe d'ancrage et d'arrimage (1 ; 101 ; 201) comportant une portion d'arrimage (12 ; 112 ; 212) d'une sangle et une portion d'ancrage (11 ; 111 ; 211) au plancher (4) apte à coopérer avec le rail (32 ; 132),
**caractérisé en ce que** :
- l'ouverture du rail (32 ; 132) s'étend dans l'une des faces du rail perpendiculaire (YZ) à la direction longitudinale (X) du plancher (4) en étant délimitée par deux bords (34, 35) de ladite face (39d),
- le système d'arrimage comprend en outre un cavalier (2 ; 102) adapté pour être monté sur l'ouverture du rail (32 ; 132) en fermant ladite ouverture,
dans lequel le cavalier (2 ; 102) est conformé pour recevoir la portion d'ancrage (11 ; 111 ; 211) de l'organe d'ancrage et d'arrimage (1 ; 101 ; 201), quand l'organe (1 ; 101 ; 201) est dans une position déployée, et
dans lequel le logement (33 ; 133) du rail (32 ; 132) et l'organe d'ancrage et d'arrimage (1 ; 101 ; 201) sont conformés pour permettre l'adoption par ledit organe (1 ; 101 ; 201) d'une position escamotée dans laquelle la portion d'ancrage (11 ; 111 ; 211) de l'organe d'ancrage et d'arrimage (1 ; 101 ; 201) est reçue dans le logement (33 ; 133) du rail (32 ; 132), l'organe d'ancrage et d'arrimage (1 ; 101 ; 201) étant mobile entre la position déployée et la position escamotée.

2. Système d'arrimage selon la revendication 1, **caractérisé en ce que** le logement (33 ; 133) s'étend dans la direction longitudinale (Y) du rail d'ancrage (32 ; 132).

3. Système d'arrimage selon l'une des revendications 1 ou 2, **caractérisé en ce que** le cavalier (2 ; 102) comporte des moyens d'encliquetage et **en ce que** l'ouverture du rail comporte, de part et d'autre de l'ouverture, des moyens d'encliquetage complémentaires.

4. Système d'arrimage selon la revendication 3, **caractérisé en ce que** les moyens d'encliquetage du cavalier comprennent deux pattes de retenue au rail (24, 25 ; 124, 125), chaque patte (24, 25; 124, 125) comportant sur une face externe une rainure (26, 27 ; 126, 127) adaptée pour recevoir un bord (34, 35 ; 134, 135) de l'ouverture du rail (32 ; 132), l'une des pattes (25 ; 125) étant coudée en forme de L pour venir en appui sur l'un des bords (35 ; 135) de l'ouverture du rail (32 ; 132), et **en ce que** le cavalier (2 ; 102) comporte en outre une paroi extérieure (28 ; 128) adjacente à l'autre patte de retenue (24 ; 124) et s'étendant orthogonalement à ladite patte.

5. Système d'arrimage selon l'une des revendications précédentes, **caractérisé en ce que** la portion d'ancrage (11 ; 111 ; 211) de l'organe d'ancrage et d'arrimage (1 ; 101 ; 201) est arrondie et **en ce que** l'intérieur du cavalier (2 ; 102) comporte une portion arrondie (22 ; 122) apte à coopérer avec la portion d'ancrage (11 ; 111 ; 211).

6. Système d'arrimage selon l'une des revendications précédentes, dans lequel le cavalier (2 ; 102) présente une surface courbe (23 ; 123) adaptée pour guider le déplacement de l'organe d'ancrage et d'arrimage (1 ; 101 ; 201) entre la position déployée et la position escamotée.

7. Système d'arrimage selon l'une des revendications précédentes, **caractérisé en ce que** le cavalier comporte une surface extérieure définissant une rigole (29 ; 129) conformée pour recevoir la portion d'arrimage (12 ; 112 ; 212) de l'organe d'ancrage et d'arrimage (1 ; 101 ; 201) lorsque l'organe d'ancrage et d'arrimage (1 ; 101 ; 201) est en position escamotée.

8. Système d'arrimage selon l'une des revendications précédentes, **caractérisé en ce que** le rail d'ancrage (32 ; 132) comporte une face supérieure, et **en ce que** le cavalier (2 ; 102) est configuré de telle sorte que l'organe d'ancrage et d'arrimage (1 ; 101 ; 201) se trouve sous la face supérieure du rail d'ancrage (39a; 139a) lorsque l'organe d'ancrage et d'arrimage (1 ; 101 ; 201) est en position escamotée.

9. Système d'arrimage selon l'une des revendications précédentes, **caractérisé en ce que** l'organe d'ancrage et d'arrimage (1 ; 101 ; 201) comporte deux portions latérales (13, 14 ; 115, 116 ; 213, 214, 215) reliant entre elles les portions d'ancrage (11 ; 111 ; 211) et d'arrimage (12 ; 112 ; 212), un trou traversant (15 ;114 ; 216, 217) étant formé entre les portions d'ancrage (11 ; 111 ; 211), d'arrimage (12 ; 112 ; 212) et latérales (13, 14 ; 115, 116 ; 213, 214, 215), lesdites portions latérales (13, 14 ; 115, 116 ; 213, 214, 215) étant recourbées.

10. Système d'arrimage selon l'une des revendications précédentes, **caractérisé en ce que** les portions d'arrimage (212) et d'ancrage (211) de l'organe d'ancrage et d'arrimage (201) sont formées de deux tiges longitudinales parallèles entre elles (211, 212) reliées par trois tiges transversales recourbées (213, 214, 215) et **en ce que** le système d'arrimage comporte deux cavaliers (2 ; 102).

11. Système d'arrimage selon l'une des revendications précédentes **caractérisé en ce que** le rail d'ancrage (32 ; 132) est relié à un bras d'extension (31 ; 131) s'étendant selon une direction longitudinale (X) apte à recevoir un bord (41) du plancher (4).

12. Support de plancher (3 ; 103) pourvu d'un rail d'ancrage (32 ; 132) d'un organe d'ancrage et d'arrimage (1 ; 101 ; 201) d'une charge sur un plancher comportant :
- un bras d'extension (31 ; 131) s'étendant selon une direction longitudinale (X) apte à recevoir un bord (41) du plancher (4), et
- un rail d'ancrage (32 ; 132) comportant un logement (33 ; 133) débouchant par une ouverture pratiquée sur au moins l'une des faces du rail, l'ouverture s'étendant dans l'une des faces du rail perpendiculaire (YZ) à la direction longitudinale (X) du bras d'extension (31 ; 131) en étant délimitée par deux bords de ladite face et le logement étant conformé pour recevoir l'organe d'ancrage et d'arrimage (1 ; 101 ; 201), **caractérisé en ce que** le logement (33 ; 133) et l'ouverture couvrent entre 50% et 100% de la longueur du rail d'ancrage (32 ; 132).

13. Support de plancher (3 ; 103) selon la revendication 12, dans lequel le logement (33 ; 133) et l'ouverture couvrent la totalité de la longueur du rail d'ancrage (32 ; 132).

14. Support de plancher (103) selon l'une quelconque des revendications 12 à 13, **caractérisé en ce que** le bras d'extension (131) définit un épaulement (131a) apte à recevoir un bord (41) du plancher (4).

## Patentansprüche

1. System zum Festzurren einer Ladung auf einem Boden (4), wobei das System umfasst:
- eine Verankerungsschiene (32; 132), die dazu bestimmt ist, mit einem Rand des Bodens verbunden zu werden, und einen Aufnahmeraum (33; 133) aufweist, der über eine Öffnung mündet, die an wenigstens einer der Seiten der Schiene angebracht ist,
- ein Organ zum Verankern und Festzurren (1; 101; 201) einer Ladung auf einem Boden, wobei das Organ zum Verankern und Festzurren (1; 101; 201) einen Abschnitt zum Festzurren (12; 112; 212) eines Gurtes und einen Abschnitt zur Verankerung (11; 111; 211) am Boden (4), der geeignet ist, mit der Schiene (32; 132) zusammenzuwirken, aufweist,
**dadurch gekennzeichnet, dass**:
- die Öffnung der Schiene (32; 132) sich in einer der Seiten der Schiene erstreckt, die senkrecht (YZ) zur Längsrichtung (X) des Bodens (4) ist, wobei sie von zwei Rändern (34, 35) dieser Seite (39d) begrenzt wird,
- das Festzurrsystem außerdem einen Reiter (2; 102) umfasst, der dafür ausgelegt ist, auf der Öffnung der Schiene (32; 132) angebracht zu werden und dabei die Öffnung zu verschließen,
wobei der Reiter (2; 102) dafür ausgebildet ist, den Verankerungsabschnitt (11; 111; 211) des Organs zum Verankern und Festzurren (1; 101; 201) aufzunehmen, wenn sich das Organ (1; 101; 201) in einer ausgestellten Position befindet, und
wobei der Aufnahmeraum (33; 133) der Schiene (32; 132) und das Organ zum Verankern und Festzurren (1; 101; 201) dafür ausgebildet sind zu ermöglichen, dass das Organ (1; 101; 201) eine zurückgezogene Position einnimmt, in welcher der Verankerungsabschnitt (11; 111; 211) des Organs zum Verankern und Festzurren (1; 101; 201) in dem Aufnahmeraum (33; 133) der Schiene (32; 132) aufgenommen ist, wobei das Organ zum Verankern und Festzurren (1; 101; 201) zwischen der ausgestellten Position und der zurückgezogenen Position beweglich ist.

2. Festzurrsystem nach Anspruch 1, **dadurch gekennzeichnet, dass** der sich Aufnahmeraum (33; 133) in der Längsrichtung (Y) der Verankerungsschiene (32; 132) erstreckt.

3. Festzurrsystem nach einem der Ansprüche 1 oder 2, **dadurch gekennzeichnet, dass** der Reiter (2; 102) Rastmittel aufweist, und dadurch, dass die Öffnung der Schiene beiderseits der Öffnung komplementäre Rastmittel aufweist.

4. Festzurrsystem nach Anspruch 3, **dadurch gekennzeichnet, dass** die Rastmittel des Reiters zwei Laschen (24, 25; 124, 125) zum Halten an der Schiene umfassen, wobei jede Lasche (24, 25; 124, 125) auf einer Außenseite eine Nut (26, 27; 126, 127) aufweist, die dafür ausgelegt ist, einen Rand (34, 35; 134, 135) der Öffnung der Schiene (32; 132) aufzunehmen, wobei eine der Laschen (25; 125) L-förmig abgewinkelt ist, um an einem der Ränder (35; 135) der Öffnung der Schiene (32; 132) zur Anlage zu kommen, und dadurch, dass der Reiter (2; 102) außerdem eine Außenwand (28; 128) aufweist, die der anderen Haltelasche (24; 124) benachbart ist und sich orthogonal zu dieser Lasche erstreckt.

5. Festzurrsystem nach einem der vorhergehenden Ansprüche, **dadurch gekennzeichnet, dass** der Verankerungsabschnitt (11; 111; 211) des Organs zum Verankern und Festzurren (1; 101; 201) gerundet ist, und dadurch, dass das Innere des Reiters (2; 102) einen gerundeten Abschnitt (22; 122) aufweist, der geeignet ist, mit dem Verankerungsabschnitt (11; 111; 211) zusammenzuwirken.

6. Festzurrsystem nach einem der vorhergehenden Ansprüche, wobei der Reiter (2; 102) eine gekrümmte Fläche (23; 123) aufweist, die dafür ausgelegt ist, die Verlagerung des Organs zum Verankern und Festzurren (1; 101; 201) zwischen der ausgestellten Position und der zurückgezogenen Position zu führen.

7. Festzurrsystem nach einem der vorhergehenden Ansprüche, **dadurch gekennzeichnet, dass** der Reiter eine Außenfläche aufweist, die eine Rinne (29; 129) definiert, welche dafür ausgebildet ist, den Festzurrabschnitt (12; 112; 212) des Organs zum Verankern und Festzurren (1; 101; 201) aufzunehmen, wenn sich das Organ zum Verankern und Festzurren (1; 101; 201) in der zurückgezogenen Position befindet.

8. Festzurrsystem nach einem der vorhergehenden Ansprüche, **dadurch gekennzeichnet, dass** die Verankerungsschiene (32; 132) eine Oberseite aufweist, und dadurch, dass der Reiter (2; 102) derart gestaltet ist, dass sich das Organ zum Verankern und Festzurren (1; 101; 201) unter der Oberseite (39a; 139a) der Verankerungsschiene befindet, wenn sich das Organ zum Verankern und Festzurren (1; 101; 201) in der zurückgezogenen Position befindet.

9. Festzurrsystem nach einem der vorhergehenden Ansprüche, **dadurch gekennzeichnet, dass** das Organ zum Verankern und Festzurren (1; 101; 201) zwei seitliche Abschnitte (13, 14; 115, 116; 213, 214, 215) aufweist, die den Verankerungs- (11; 111; 211) und den Festzurrabschnitt (12; 112; 212) miteinander verbinden, wobei ein Durchgangsloch (15; 114; 216, 217) zwischen dem Verankerungs- (11; 111; 211), dem Festzurr- (12; 112; 212) und den seitlichen (13, 14; 115, 116; 213, 214, 215) Abschnitten gebildet wird, wobei die seitlichen Abschnitte (13, 14; 115, 116; 213, 214, 215) gekrümmt sind.

10. Festzurrsystem nach einem der vorhergehenden Ansprüche, **dadurch gekennzeichnet, dass** der Festzurr- (212) und der Verankerungsabschnitt (211) des Organs zum Verankern und Festzurren (201) von zwei zueinander parallelen Längsstangen (211, 212) gebildet werden, die durch drei gekrümmte Querstangen (213, 214, 215) verbunden sind, und dadurch, dass das Festzurrsystem zwei Reiter (2; 102) aufweist.

11. Festzurrsystem nach einem der vorhergehenden Ansprüche, **dadurch gekennzeichnet, dass** die Verankerungsschiene (32; 132) mit einem Verlängerungsarm (31; 131) verbunden ist, der sich in einer Längsrichtung (X) erstreckt und geeignet ist, einen Rand (41) des Bodens (4) aufzunehmen.

12. Bodenhalterung (3; 103), welche mit einer Verankerungsschiene (32; 132) eines Organs zum Verankern und Festzurren (1; 101; 201) einer Ladung auf einem Boden versehen ist und aufweist:
- einen Verlängerungsarm (31; 131), der sich in einer Längsrichtung (X) erstreckt und geeignet ist, einen Rand (41) des Bodens (4) aufzunehmen, und
- eine Verankerungsschiene (32; 132), die einen Aufnahmeraum (33; 133) aufweist, der über eine Öffnung mündet, die an wenigstens einer der Seiten der Schiene angebracht ist, wobei sich die Öffnung in einer der Seiten der Schiene erstreckt, die senkrecht (YZ) zur Längsrichtung (X) des Verlängerungsarmes (31; 131) ist, wobei sie von zwei Rändern dieser Seite begrenzt wird, und wobei der Aufnahmeraum dafür ausgebildet ist, das Organ zum Verankern und Festzurren (1; 101; 201) aufzunehmen, **dadurch gekennzeichnet, dass** sich der Aufnahmeraum (33; 133) und die Öffnung über 50 % bis 100 % der Länge der Verankerungsschiene (32; 132) erstrecken.

13. Bodenhalterung (3; 103) nach Anspruch 12, wobei sich der Aufnahmeraum (33; 133) und die Öffnung über die gesamte Länge der Verankerungsschiene (32; 132) erstrecken.

14. Bodenhalterung (103) nach einem der Ansprüche 12 bis 13, **dadurch gekennzeichnet, dass** der Verlängerungsarm (131) einen Absatz (131a) definiert, der geeignet ist, einen Rand (41) des Bodens (4) aufzunehmen.

## Claims

1. System for securing a load onto a floor (4), said system comprising:
- an anchoring rail (32; 132) intended to be connected to an edge of the floor and including a housing (33; 133) leading through an opening made in one of the faces of the rail,
- a member (1; 101; 201) for anchoring and securing a load onto a floor, said anchoring and securing member (1; 101; 201) including a portion (12; 112; 212) for securing a strap and a portion (11; 111; 211) for anchoring to the floor (4) capable of cooperating with the rail (32; 132),
**characterised in that**:
- the opening of the rail (32; 132) extends in one of the faces of the rail perpendicular (YZ) to the longitudinal direction (X) of the floor (4) while being delimited by two edges (34, 35) of said face (39d),
- the securing system further comprises a clip (2; 102) adapted to be mounted on the opening of the rail (32; 132) by closing said opening,
wherein the clip (2; 102) is shaped to receive the anchoring portion (11; 111; 211) of the anchoring and securing member (1; 101; 201), when the member (1; 101; 201) is in a deployed position, and
wherein the housing (33; 133) of the rail (32; 132) and the anchoring and securing member (1; 101; 201) are shaped to enable said member (1; 101; 201) to adopt a retracted position wherein the anchoring portion (11; 111; 211) of the anchoring and securing member (1; 101; 201) is received in the housing (33; 133) of the rail (32; 132), the anchoring and securing member (1; 101; 201) being movable between the deployed position and the retracted position.

2. Securing system according to claim 1, **characterised in that** the housing (33; 133) extends in the longitudinal direction (Y) of the anchoring rail (32; 132).

3. Securing system according to one of claims 1 or 2, **characterised in that** the clip (2; 102) includes locking means and **in that** the opening of the rail includes, on either side of the opening, complementary locking means.

4. Securing system according to claim 3, **characterised in that** the locking means of the clip comprise two tabs for holding onto the rail (24, 25; 124, 125), each tab (24, 25; 124, 125) including on an outer face a groove (26, 27; 126, 127) adapted to receive an edge (34, 35; 134, 135) of the opening of the rail (32; 132), one of the tabs (25; 125) being elbowed in an L shape to bear upon one of the edges (35; 135) of the opening of the rail (32; 132), and **in that** the clip (2; 102) further includes an outer wall (28; 128) adjacent to the other holding tab (24; 124) and extending orthogonally to said tab.

5. Securing system according to one of the preceding claims, **characterised in that** the anchoring portion (11; 111; 211) of the anchoring and securing member (1; 101; 201) is rounded and **in that** the inside of the clip (2; 102) includes a rounded portion (22; 122) capable of cooperating with the anchoring portion (11; 111; 211).

6. Securing system according to one of the preceding claims, wherein the clip (2; 102) has a curved surface (23; 123) adapted to guide the movement of the anchoring and securing member (1; 101; 201) between the deployed position and the retracted position.

7. Securing system according to one of the preceding claims, **characterised in that** the clip includes an outer surface defining a channel (29; 129) shaped to receive the securing portion (12; 112; 212) of the anchoring and securing member (1; 101; 201) when the anchoring and securing member (1; 101; 201) is in the retracted position.

8. Securing system according to one of the preceding claims, **characterised in that** the anchoring rail (32; 132) includes a top face, and **in that** the clip (2; 102) is configured such that the anchoring and securing member (1; 101; 201) is located below the top face of the anchoring rail (39a; 139a) when the anchoring and securing member (1; 101; 201) is in the retracted position.

9. Securing system according to one of the preceding claims, **characterised in that** the anchoring and securing member (1; 101; 201) includes two lateral portions (13, 14; 115, 116; 213, 214, 215) mutually connecting the anchoring (11; 111; 211) and securing portions (12; 112; 212), a through hole (15; 114; 216, 217) being formed between the anchoring (11; 111; 211), securing (12; 112; 212) and lateral portions (13, 14; 115, 116; 213, 214, 215), said lateral portions (13, 14; 115, 116; 213, 214, 215) being curved.

10. Securing system according to one of the preceding claims, **characterised in that** the securing (212) and anchoring portions (211) of the anchoring and securing member (201) are formed of two mutually parallel longitudinal rods (211, 212) connected by three curved transversal rods (213, 214, 215) and **in that** the securing system includes two clips (2; 102).

11. Securing system according to one of the preceding claims **characterised in that** the anchoring rail (32; 132) is connected to an extension arm (31; 131) extending along a longitudinal direction (X) capable of receiving an edge (41) of the floor (4).

12. Floor support (3; 103) provided with an anchoring rail (32; 132) of a member (1; 101; 201) for anchoring and securing a load onto a floor including:
- an extension arm (31; 131) extending along a longitudinal direction (X) capable of receiving an edge (41) of the floor (4), and
- an anchoring rail (32; 132) including a housing (33; 133) leading through an opening made in at least one of the faces of the rail,
the opening extending in one of the faces of the rail perpendicular (YZ) to the longitudinal direction (X) of the extension arm (31; 131) while being delimited by two edges of said face and the housing being shaped to receive the anchoring and securing member (1; 101; 201),
**characterised in that** the housing (33; 133) and the opening cover between 50% and 100% of the length of the anchoring rail (32; 132).

13. Floor support (3; 103) according to claim 12, wherein the housing (33; 133) and the opening cover the entire length of the anchoring rail (32; 132).

14. Floor support (103) according to any one of claims 12 to 13, **characterised in that** the extension arm (131) defines a shoulder (131a) capable of receiving an edge (41) of the floor (4).
